Europäisches Patentamt

European Patent Office

Office européen des brevets

(11) Veröffentlichungsnummer: **0 264 361 B1**

(12) **EUROPÄISCHE PATENTSCHRIFT**

(45) Veröffentlichungstag der Patentschrift: **04.12.91**

(51) Int. Cl.⁵: **F16K 21/16**

(21) Anmeldenummer: **87890226.1**

(22) Anmeldetag: **12.10.87**

(54) **Selbstschlussventil für sanitäre Anlagen.**

(30) Priorität: **13.10.86 DE 3634827**

(43) Veröffentlichungstag der Anmeldung:
**20.04.88 Patentblatt 88/16**

(45) Bekanntmachung des Hinweises auf die
Patenterteilung:
**04.12.91 Patentblatt 91/49**

(84) Benannte Vertragsstaaten:
**AT FR IT**

(56) Entgegenhaltungen:
**DE-A- 2 200 672**
**DE-A- 2 908 882**
**DE-U- 8 018 314**
**US-A- 828 374**
**US-A- 841 093**

(73) Patentinhaber: **IDEAL-STANDARD GMBH**
**Euskirchener Strasse 80**
**W-5300 Bonn 1(DE)**

(72) Erfinder: **Koch, Wilhelm**
**Blankenheimerstrasse 10**
**W-5489 Bongard(DE)**
Erfinder: **Burkard, Bernhard**
**Moselstrasse 46**
**W-5599 Bremm(DE)**

(74) Vertreter: **Puchberger, Georg, Dipl.-Ing. et al**
**Patentanwälte Dipl.-Ing. Georg Puchberger**
**Dipl.-Ing. Rolf Puchberger Dipl.-Ing. Peter**
**Puchberger Singerstrasse 13 Postfach 55**
**A-1010 Wien(AT)**

## Beschreibung

Die Erfindung betrifft ein durch einen Auslösestift druckbetätigbares Selbstschlußventil für sanitäre Anlagen mit einer Gegendruckkammer für ein langsames Schließen.

Derartige Selbstschlußventile sind bekanntermaßen bei Wasserarmaturen mit einem Druckknopf ausgebildet, über den das Ventil geöffnet wird, woraufhin nach teilweiser Entleerung der Gegendruckkammer ein Ventil mit Unterstützung der Ventilfeder wieder in seine Schließstellung zurückgeht.

Selbstschlußventile haben den großen Vorteil, daß die nach der Betätigung freigegebene Wassermenge durch einmalige Einstellung bei der Montage aber auch nachträglich relativ genau dosierbar ist, so daß sie optimal wassersparend arbeiten können, was für übliche Spindelarmaturen nicht gegeben ist. Besonders in öffentlichen Anlagen, wie Bädern, Toilettenanlagen und dgl. Sanitärräumen, beispielsweise in kommunalen Gebäuden, auf Bahnhöfen, Flughäfen und dgl., ist es im Interesse der Wasserersparnis angezeigt, von vornherein, also durch die Betätigung der Armatur selbst bereits eine Dosierung der Wassermenge vorzunehmen. Auslaufarmaturen mit selbstschließender Funktion sind als mit Druckknopf oder mit Druckhebel betätigbare Armaturen für die Toiletten- oder Urinalspülung allgemein bekannt.

Aus dem DE-GM 8018314 ist ein derartiges selbstschließendes Ventil für Wasserarmaturen mit einem eine Gegendruckkammer umgreifenden und den Hubkolben übergreifenden Topfzylinder oder dergl. bekannt, bei dem über einen Handgriff betätigbar mittels Hubbewegung durch Entleerung der Gegendruckkammer das den bekannten Wasserstrom freigebende Ventil geöffnet und mit dem selbsttätigen Auffüllen der Gegendruckkammer wieder geschlossen wird, und wobei der Handgriff als Drehgriff ausgebildet ist und in Betätigungseingriff mit einem Drehteil steht, der bei Drehung des Handgriffes die Stellung des Topfzylinders in Achsrichtung gegenüber der des Hubkolbens verändert.

Hierbei muß die Hauptventildichtung entgegen dem anstehenden Wassereingangsdruck auf den Ventilsitz gezwungen werden, wofür eine hohe Betätigungskraft erforderlich ist; ferner ist ein feststehendes Kurven-Drehteil vorgesehen, wodurch der Drehgriff auf und ab bewegt wird. Ferner ragt eine Nadel in die durchgehende Bohrung des Hubkolbens hinein und bestimmt den engsten Durchlaßquerschnitt zur Befüllung der Gegendruckkammer. Eine solche Ausführung ist schmutzempfindlich.

Aus der DE-A-22 00 672 ist bereits für ein selbstschliessendes Absperrorgan ein Druckmittelverzögerungszylinder bekannt, der einen in einem Zylinder verschieblich geführten Kolben, der mit einer in ihrer Bewegung zu verlangsamenden Hülse verbunden ist und eine Einrichtung zum Aufheben der vollkommenen Abdichtung des Zylinders, welche eine aus dem Inneren des Zylinders in dessen Umgebung führende und verengte und vorbestimmte Verbindung herstellt, besitzt. Durch den Staudruck von Wasser in einer Gegendruckkammer wird verhindert, daß eine Feder das Ventil rasch schließt. Die Anordnung ist so getroffen, daß das Wasser aus der Gegendruckkammer langsam entfernt wird.

Die DE-C-29 088 82 zeigt eine ähnliche Armatur für Duschanlagen, wobei jedoch zur Verzögerung der Schließbewegung ein mit Öl gefüllter Bremszylinder eingesetzt wird.

Der vorliegenden Erfindung liegt daher die Aufgabe zugrunde, ein Selbstschlußventil zu schaffen, das über eine sichere Öffnungs- und Schließfunktion verfügt, einfach und preiswert in der Herstellung ist, dessen Öffnungszeit leicht veränderbar und welches gegen herkömmliche genormte 1/2 Zoll-Oberteile ausgetauscht werden kann.

Erfindungsgemäß wird das Selbstschlußventil entsprechend dem Patentanspruch 1 ausgebildet. Diese Selbstschlußarmatur ist durch leichtes Antippen bzw. durch einen Kraftaufwand von ca. 20-30N betätigbar.

Ein besonders einfacher vorteilhafter Aufbau eines derartigen Selbstschlußventils ist in den Unteransprüchen gekennzeichnet.

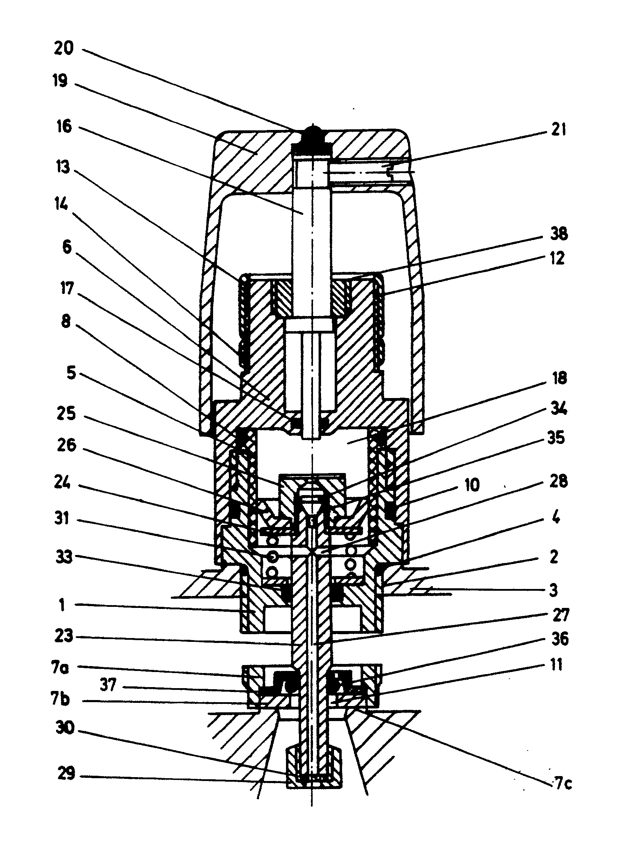

Ein Ausführungsbeispiel eines derartigen Selbstschlußventils wird nachstehend unter Bezugnahme auf die Zeichnung beschrieben.

Die einzigte Figur zeigt ein Selbstschlußventil für sanitäre Anlagen mit einer Gegendruckkammer für langsames Schließen; dieses besteht aus einem Ventilkörper 1, der mittels eines Gewindes 2 in eine Leitung 3 unter Einführung eines Dichtringes 4 eingeschraubt ist; dabei ist ferner der Ventilkörper 1 mit einem Gehäuse 7a und einem Gummiring (ventilsitzring) 7b gegen seinen Sitz 7c dichtend gespannt. In dem Ventilkörper 1 befindet sich eine Kunststoff-Laufbuchse 5, diese ist durch eine Kappe 6 unter Einfügung eines O-Ringes 8 befestigt. Die Kappe 6 ist mit einem Gewinde 12 versehen und darauf befinden sich als Anschlag für die Hublänge eine Einstellmutter 13 und eine Kontermutter 14. In der Kappe 6 ist ein Auslösestift 16 angeordnet; dieser ist am unteren Ende mit einem O-Ring gegenüber einer Gegendruckkammer 18 abgedichtet. Auf dem oberen Ende des Auslösestiftes ist ein Griff 19 angeordnet, dieser trägt eine Indexscheibe 20 zum Zwecke der Kennzeichnung, dabei ist der Griff 19 mittels einer Schraube 21 befestigt.

In der Gegendruckkammer 18 ist eine an einem Ventilstift 23 unter Einfügung einer Unterlegscheibe 24 durch einen Schraubkörper 25 befestigte Topfmanschette 26 angeordnet.

Der Ventilstift 23 ist mit einer Längs- 27 und einer Querbohrung 28 sowie einer konischen Ausnehmung 35, in der sich ein Ventilkegel 34 befindet, ausgestattet und trägt am unteren Ende eine Überwurfmutter 29 zum Verschließen einer Durchtrittsöffnung 11 und ist mit einem Sieb 30 versehen und steht unter dem konstanten Druck einer Ventilfeder 31; dabei ist der Ventilstift 23 im Ventilkörper 1 durch einen O-Ring 33 abgedichtet. In dem Schraubkörper 25 ist der Ventilkegel 34 angeordnet. In dem Gehäuse 7a befindet sich ein weiteres Gehäuse 37 und ein O-Ring 36.

Die Funktion des Selbstschlußventiles ist folgende:

Im geschlossenen Zustand drückt die Feder 31 den Ventilstift 23 nach oben, bis die Überwurfmutter 29 am Gummiring 7b abdichtet. Dabei steht der Leitungsdruck, bedingt durch die Längs- und Querbohrung 27, 28 im Ventilstift 23, auch unterhalb und oberhalb der Topfmanschette 26 an. Durch den Leitungsdruck und die Ventilfeder 31 wird der Auslösestift 16 mit dem Griff 19 bis zum Anschlag herausgedrückt. Die Öffnung des Selbstschlußventiles erfolgt dadurch, daß zur Betätigung der Griff 19 mit dem Auslösestift 16 bis zum Anschlag (Einstellmutter 13) eingedrückt wird. Dabei stößt der Auslösestift 16 auf den Schraubkörper 25, der als Schwimmerventil ausgebildet ist und in dem sich ein Ventilkegel 34 befindet und drückt den Ventilstift 23 nach unten. Das Wasser strömt von unten über die Topfmanschette 26 nach oben. Zusätzlich strömt Wasser über das Sieb 30 durch den Ventilstift 23 und der Ventilkegel 34 hebt nach oben ab. Das Ventil ist nun offen, wobei das Wasser durch die Wassereinlaßöffnung 11 zwischen Gummiring 7b und Ventilstift 23 nach außen abfließt, und dabei durch den O-Ring 36 im Gehäuse 37 gedrosselt wird. Der Durchfluß wird so konstant gehalten und ist daher nahezu druckunabhängig.

Die Schließung des Selbstschlußventiles erfolgt dadurch, daß man den Griff 19 losläßt, so daß dieser vom Leitungsdruck wieder bis zu einem Anschlag 38 herausgedrückt wird. Gleichzeitig drückt die Ventilfeder 31 den Ventilstift 23 nach oben. Dabei muß das Wasser aus dem oberen Raum durch die Kerbe 35 in dem Ventilstift 23 (Topfmanschette 26 dichtet ab) nach unten gedrückt werden und wird dabei durch den Ventilkegel gedrosselt. Dafür ist der Ventilkegel 34 oder die konische Ausnehmung 35 mit weiteren nicht gezeigten Kerben bzw. Ausnehmungen versehen. Überschüssiges Wasser gelangt durch die Längsbohrung 27 im Ventilstift 23 und das Sieb 30 nach außen.

Das Selbstschlußventil ist vorzugsweise mit einem genormten 1/2 Zoll-Anschluß versehen und kann daher leicht gegen herkömmlich genormte Ventile ausgetauscht werden.

Durch den mittels des Gehäuses 37 und des O-Ringes 36 gebildeten Durchflußkonstanthalter kann auch bei längerer Öffnungszeit Wasser gespart werden.

Das Selbstschlußventil ist leicht zu betätigen und erfordert lediglich einen Kraftaufwand von ca. 20-30N.

Selbstverständlich ist die Erfindung nicht auf das Anwendungsgebiet und ferner nicht auf den Sanitärbereich und das Ausführungsbeispiel beschränkt.

Die Herstellung eines erfindungsgemäßen Selbstanschlußventiles ist einfach und bereitet keine Schwierigkeiten. Der Kostenaufwand ist relativ gering.

**Patentansprüche**

1. Ein durch einen Auslösestift (16) druckbetätigbares Selbstschlußventil für sanitäre Anlagen mit einer Gegendruckkammer (18) für ein langsames Schließen, wobei eine Wassereinlaßöffnung (11) durch einen Ventilstift (23) verschließbar ist und ein Ventilkörper (1) dafür mit einem Ventilsitzring (7b) und einem Gehäuse (7a) versehen und auf einem Sitz (7c) einer Leitung (3) dichtend aufliegt, wobei der Ventilstift (23) ferner mit einer, mit der Gegendruckkammer (18) kommunizierenden Längsbohrung (27) sowie einer Querbohrung (28) ausgestattet ist und am oberen Ende eine Topfmanschette (26) und eine Unterlegscheibe (24) trägt, welche über einen Schraubkörper (25) an dem Ventilstift (23) befestigt sind, wobei die Topfmanschette (26) in einer separaten Kunststoff-Laufbuchse (5) gleitet und die Gegendruckkammer (18) von einer weiteren Kammer trennt, in welche die Querbohrung (28) mündet und welche eine Ventilfeder (31) aufnimmt, die sich an der Unterlegscheibe (24) einerseits und dem Ventilkörper (1) andererseits abstützt, wobei ein verzögerter Selbstschluß durch den Staudruck in der Gegendruckkamer (18) erfolgt, der durch die Ventilfeder (31) erzeugt wird, wobei das Wasser von der weiteren Kammer zur Gegendruckkammer (18) durch die Bohrungen und den Schraubkörper (25) langsam austreten kann, und wobei

   a) zur Erzielung einer vom Wasserdruck unabhängigen Öffnungszeit der Auslösestift (16) und der Ventilstift (23) als von einander getrennte Baueinheiten ausgebildet sind,

   b) durch den Auslösestift (16) der Ventilstift (23) betätigbar und vom Ventilsitzring (7b) entgegen dem anstehenden Wasserdruck leicht abhebbar ist,

   c) die Öffnungszeit durch eine Hubeinstellung in Verbindung mit einer Einstellmutter

3

(13) regulierbar ist,

d) der Schraubkörper (25), der als Angriffsfläche für den Auslösestift (16) dient, als Schwimmerventil ausgebildet ist und ein Ventilkegel (34) in einer konischen Ausnehmung (35) am oberen Ende des Ventilstiftes (23) angeordnet ist,

d) eine Überwurfmutter (29) als weiterer, mit dem Ventilsitzring zusammenarbeitender Ventilkegel ausgebildet ist und ein Sieb (30) hält, das vor der Längsbohrung (27) des Ventilstiftes (23) angeordnet ist,

f) nach Betätigung des Auslösestiftes (16) das Selbstschlußventil durch die Ventilfeder (31) langsam in eine Schließstellung überführbar ist und in dieser Stellung durch die Ventilfeder (31) gehalten wird.

2. Selbstschlußventil nach Anspruch 1, dadurch gekennzeichnet, daß der Ventilkörper (1) mittels eines Gewindes (2) in die Leitung (3) eingeschraubt ist und daß das Selbstschlußventil mit einem genormten 1/2 Zoll-Anschluß versehen und daher gegen bereits eingebaute, herkömmliche Ventile austauschbar ist.

3. Selbstschlußventil nach den Ansprüchen 1 und 2, dadurch gekennzeichnet, daß der Auslösestift (16) durch eine Kappe (6) dichtend hindurchgeführt ist und mit seinem Ende in die Gegendruckkammer reicht.

4. Selbstschlußventil nach Anspruch 3, dadurch gekennzeichnet, daß die Kappe (6) auf den Ventilkörper (1) dichtend aufgeschraubt ist.

5. Selbstschlußventil nach Anspruch 4, dadurch gekennzeichnet, daß die Kappe (6) mit einem Gewinde, auf dem sich die Einstellmutter (13) und eine Kontermutter (14) befinden, versehen ist.

6. Selbstschlußventil nach den Ansprüchen 1 bis 5, dadurch gekennzeichnet, daß in dem Gehäuse (7a) ein Gehäuseabschnitt (37) vorgesehen ist, der mit einem O-Ring (36) zusammenarbeitet und einen konstanten Wasserdurchfluß nach Betätigung des Auslösestiftes erlaubt.

7. Selbstschlußventil nach den Ansprüchen 1 bis 6, dadurch gekennzeichnet, daß der Ventilkegel (34) mit mehreren Kerben zur dosierten Wasserdurchströmung versehen ist.

8. Selbstschlußventil nach den Ansprüchen 1 bis 7, dadurch gekennzeichnet, daß die konische Ausnehmung (35) mit Kerben für den Wasserdurchtritt ausgestattet ist.

## Claims

1. A self-closing valve which is pressure-actuable by a triggering pin (16), for sanitary installations, having a counterpressure chamber (18) for slow closure, wherein a water inlet opening (11) is closable by a valve pin (23) and a valve body (1) therefor is provided with a valve seat ring (7b) and a housing (7a) and lies sealingly against a seat (7c) of a conduit (3), wherein the valve pin (23) is also provided with a longitudinal bore (27) communicating with the counterpressure chamber (18), and with a transverse bore (28) and at the upper end carries a cup-like ring (26) and a support disc (24), which are fixed to the valve pin (23) by way of a screw member (25), wherein the cup-like ring (26) slides in a separate plastics liner sleeve (5) and separates the counterpressure chamber (18) from a further chamber into which the transverse bore (28) opens and which accommodates a valve spring (31) which bears against the support disc (24) on the one hand and the valve body (1) on the other hand, wherein delayed self-closure occurs due to the pressure head in the counterpressure chamber (18), which is produced by the valve spring (31), wherein the water can issue slowly from the further chamber to the counterpressure chamber (18) through the bores and the screw member (25), and wherein

a) to provide an opening time which is independent of the water pressure the triggering pin (16) and the valve pin (23) are in the form of structural units which are separate from each other,

b) the valve pin (23) is actuable by the triggering pin (16) and can be easily lifted away from the valve seat ring (7b) against the water pressure obtaining,

c) the opening time can be regulated by a stroke adjustment in connection with an adjusting nut (13),

d) the screw member (25) which serves as an engagement surface for the triggering pin (16) is in the form of a float valve and a valve cone (34) is arranged in a conical opening (35) at the upper end of the valve pin (23),

e) a cap nut (29) is in the form of a further valve cone co-operating with the valve seat ring and holds a filter (30) which is arranged in front of the longitudinal bore (27) of the valve pin (23), and

f) after actuation of the triggering pin (16) the self-closing valve can be slowly moved into a closed position by the valve spring (31) and is held in the closed position by the valve spring (31).

2. A self-closing valve according to claim 1 characterised in that the valve body (1) is screwed into the conduit (3) by means of a screwthread (2) and that the self-closing valve is provided with a standardised ½ inch connection and can therefore be exchanged for conventional valves which are already installed.

3. A self-closing valve according to claims 1 and 2 characterised in that the triggering pin (16) is passed sealingly through a cap (6) and extends with its end into the counterpressure chamber.

4. A self-closing valve according to claim 3 characterised in that the cap (6) is sealingly screwed on to the valve body (1).

5. A self-closing valve according to claim 4 characterised in that the cap (6) is provided with a screwthread on which the adjusting nut (13) and a lock nut (14) are disposed.

6. A self-closing valve according to claims 1 to 5 characterised in that provided in the housing (7a) is a housing portion (37) which co-operates with an O-ring (36) and which permits a constant through-flow of water after actuation of the triggering pin.

7. A self-closing valve according to claims 1 to 6 characterised in that the valve cone (34) is provided with a plurality of notches for a metered through-flow of water.

8. A self-closing valve according to claims 1 to 7 characterised in that the conical opening (35) is provided with notches for water to pass through.

## Revendications

1. Vanne à fermeture automatique pour installations sanitaires, commandée en enfonçant une tige d'actionnement (16) et comportant une chambre de contre-pression (18) pour une fermeture lente une couverture d'entrée d'eau (11) pouvant être obturée par une tige d'obturation (23), et la vanne comportant un corps (1) et une bague d'obturation (7b) associée à un boitier (7a) et adaptée pour venir en appui étanche sur un siège (7c) d'une canalisation (3), la tige d'obturation (23) étant en outre pourvue d'un perçage longitudinal (27) qui communique avec la chambre de contre-pression (18) ainsi que d'un perçage transversal (28) et portant à son extrémité supérieure une coupelle élastique (26) et une rondelle d'appui (24) qui sont fixées sur la tige d'obturation (23) par un bouchon vissé (25), la coupelle élastique (26) étant montée à coulisse dans un manchon séparé en matière plastique (5) et séparant la chambre de contre pression (18) d'une autre chambre dans laquelle débouche le perçage transversal (28) et qui contient un ressort (31) de rappel de la vanne, monté en compression entre la rondelle d'appui (24) et le corps (1) de la vanne la pression de retenue dans la chambre de contre-pression (18) provoquant ainsi un ralentissement du mouvement de fermeture automatique dû à l'effet du ressort de rappel (31), en raison de l'écoulement lent de l'eau contenue dans l'autre chambre qui s'échappe alors de l'autre chambre vers la chambre de contre-pression (18) en passant dans les perçages de la tige et à travers le bouchon vissé (25), et en outre :

a) pour obtenir une durée d'ouverture indépendante de la pression de l'eau, la tige d'actionnement (16) et la tige d'obturation (23) constituant des éléments unitaires séparés l'un de l'autre.

b) la tige d'obturation (23) étant commandée par l'intermédiaire de la tige d'actionnement (16) et pouvant être facilement écartée de la rondelle d'étanchéité (7b) associée au siège de la vanne, à l'encontre de la pression de l'eau,

c) la durée d'ouverture de la vanne étant réglable, grâce à un réglage de la course assuré par un écrou de réglage (13),

d) le bouchon vissé (25), dont la face est prévue pour recevoir la poussée de la tige d'actionnement (16), constituant une soupape à flotteur et contenant un clapet tronconique (34) associé à un évidement conique (35) ménagé à l'extrémité supérieure de la tige d'obturation (23),

e) un chapeau vissé (29) constituant un obturateur conique supplémentaire qui coopère avec la rondelle d'étanchéité (7b) associée au siège de la vanne, et contenant un filtre (20) disposé à l'entrée du perçage longitudinal (27) de la tige d'obturation (23),

f) la vanne à fermeture automatique, après une manoeuvre de la tige d'actionnement (16) pouvant revenir lentement en position de fermeture sous l'action du ressort de rappel (31) et se trouvant maintenue dans cette position par le ressort de rappel (31).

2. Vanne à fermeture automatique selon la revendication 1, caractérisée en ce que le corps (1) de la vanne est monté par vissage sur la canalisation (3) grâce à un filetage (2), et en ce que la vanne à fermeture automatique est munie d'un raccord normalisé de 1/2 pouce pour permettre de monter la vanne à la place de vannes ordinaires déjà installées.

3. Vanne à fermeture automatique selon les revendications 1 et 2, caractérisée en ce que la tige d'actionnement (16) traverse de manière étanche un chapeau (6) qui guide la tige, dont l'extrémité pénètre dans la chambre de contre-pression (18).

4. Vanne à fermeture automatique selon la revendication 3, caractérisée en ce que le chapeau (6) est vissé de manière étanche sur le corps (1) de la vanne.

5. Vanne à fermeture automatique selon la revendication 4, caractérisée en ce que le chapeau porte un filetage (12) sur lequel sont vissés l'écrou de réglage (13) et un contre-écrou (14).

6. Vanne à fermeture automatique selon les revendications 1 à 5, caractérisée en ce qu'un boîtier secondaire (37) est prévu dans le boîtier (7a) et adapté pour coopérer avec un joint torique (36) pour assurer un débit d'eau constant après manoeuvre de la tige d'actionnement (16).

7. Vanne à fermeture automatique selon les revendications 1 à 6, caractérisée en ce que le clapet conique (34) de la vanne est pourvu de plusieurs rainures pour permettre un écoulement de l'eau à un débit dosé.

8. Vanne à fermeture automatique selon les revendications 1 à 7, caractérisée en ce que l'évidement conique (35) est pourvu de rainures pour permettre le passage de l'eau.